(19) Europäisches Patentamt / European Patent Office / Office européen des brevets

(11) **EP 1 194 858 B1**

(12) **EUROPÄISCHE PATENTSCHRIFT**

(45) Veröffentlichungstag und Bekanntmachung des Hinweises auf die Patenterteilung:
**14.02.2007  Patentblatt 2007/07**

(21) Anmeldenummer: **00909280.0**

(22) Anmeldetag: **01.03.2000**

(51) Int Cl.:
*G06F 13/40* *(2006.01)*

(86) Internationale Anmeldenummer:
**PCT/EP2000/001748**

(87) Internationale Veröffentlichungsnummer:
**WO 2000/075795 (14.12.2000 Gazette 2000/50)**

(54) **DATENÜBERTRAGUNGSEINRICHTUNG**

DATA TRANSMISSION SYSTEM

DISPOSITIF DE TRANSMISSION DE DONNEES

(84) Benannte Vertragsstaaten:
**AT BE CH CY DE DK ES FI FR GB GR IE IT LI LU MC NL PT SE**

(30) Priorität: **08.06.1999  DE 19926006**

(43) Veröffentlichungstag der Anmeldung:
**10.04.2002  Patentblatt 2002/15**

(73) Patentinhaber: **Moeller GmbH**
**53115 Bonn (DE)**

(72) Erfinder: **CULCA, Stefan-Horea**
**D-53721 Siegburg (DE)**

(56) Entgegenhaltungen:
**US-A- 4 535 421          US-A- 5 555 438**

EP 1 194 858 B1

**Beschreibung**

Die Erfindung betrifft eine Datenübertragungseinrichtung nach dem Oberbegriff des Anspruchs 1.

Eine derartige serielle Datenübertragungseinrichtung ist zum Beispiel durch das Bussystem ASI (Aktor-Sensor-Interface) bekannt. Die Teilnehmer dieses Bussystems sind Aktoren und Sensoren unterschiedlichster Art. Alle Geräte die an ein solches System angeschlossen werden, müssen eine entsprechende Intelligenz in Form eines Mikrokontrollers oder eines ASIC und eine kompatible Geräteschnittstelle aufweisen. Die Kommunikation zwischen den Busteilnehmern und ihre Spannungsversorgung wird über ein zweiadriges nicht abgeschirmtes Kabel realisiert. Hierfür werden die Daten moduliert über die Versorgungsspannung gesendet. Für die sichere Datenübertragung werden bei den Teilnehmern des ASI-Bussystems speziell entwickelte ASIC-Bausteine verwendet. Eine solche Lösung hat sich in der Vergangenheit bereits bewährt, ist aber für kleinere Systeme technisch zu aufwendig und zu teuer.

Der Erfindung liegt daher die Aufgabe zugrunde, eine Datenübertragungseinrichtung zu schaffen, die bei geringerem technischen Aufwand eine serielle asynchrone Datenübertragung gewährleistet.

Ausgehend von einer Datenübertragungseinrichtung der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Durch die erfindungsgemäße Einspeisung eines Stroms, insbesondere eines Konstantstroms, in die einzige, bidirektionale Datenübertragungsleitung der Einrichtung wird die busseitige Stromversorgung des vorzugsweise galvanisch getrennten Schaltungsteils des ersten Gerätes (vorzugsweise Mastergerät) gewährleistet.

Bei der Kommunikation zwischen einem Master- und einem Slavegerät zum Beispiel, wird die Stromversorgung beider Geräte in der Regel über das Netzteil des Mastergerätes gewährleistet.

Mit Vorteil wird gemäß der Erfindung durch die Einspeisung eines, vorzugsweise als Konstantstrom gebildeten, Stroms und die dadurch realisierte Versorgung des busseitigen Schaltungsteils, das Netzteil des Mastergerätes entlastet. Hierdurch kann auf ein Netzteil mit galvanisch getrennten Versorgungsanschlüssen für busseitige und geräteseitige Schaltungsteile des Mastergerätes verzichtet werden. In der bevorzugten Ausführungsform der Erfindung sind die Sender- und Empfängerschaltungsteile des Slavegerätes mit herkömmlichen Transistoren (hier NPN-Transistoren) und die Sender- und Empfängerschaltungsteile des Mastergerätes mit für die galvanische Trennung geeigneten Optokopplern ausgeführt. Die beiden Schaltungsteile können als separate Kopplungsmodule zum Anschluß an intelligente Schalt- oder Steuerungsgeräte oder aber als separate Koppelmodule zur Kopplung von Steuerungsgeräten mit an diese anschließbaren Erweiterungsbaugruppen oder dergleichen ausgebildet sein.

Weitere Einzelheiten und Vorteile der Erfindung ergeben sich aus dem folgenden, anhand von Figuren erläuterten Ausführungsbeispiel. Es zeigen

Figur 1:   eine Datenübertragungseinrichtung gemäß der Erfindung in schematischer Darstellung;

Figur 2:   eine Datenübertragungseinrichtung gemäß Fig. 1 in einer möglichen Ausführungsform, und

Figur 3:   eine Datenübertragungseinrichtung in einer weiteren möglichen Ausführungsform.

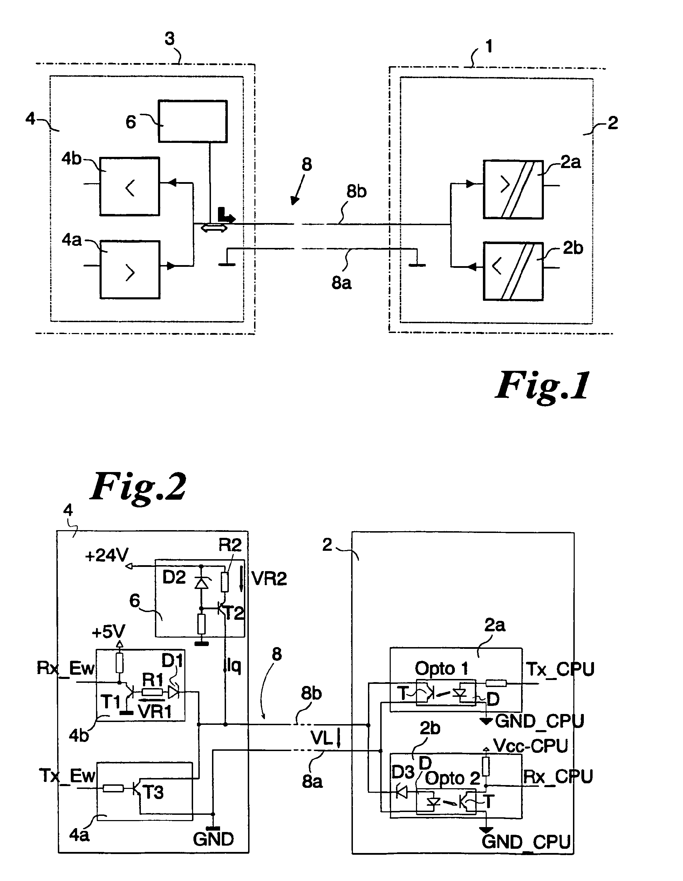

Nach Fig. 1 umfaßt die erfindungsgemäße Datenübertragungseinrichtung zwei über eine zweipolige Leitung 8 miteinander verbindbare Schaltungsteile.

Ein erster Schaltungsteil 2 dient der Ankopplung an ein Grundgerät 1 (Master), insbesondere eine programmierbare Kleinsteuerung wie Logikrelais oder dergleichen. Eine derartige Kleinsteuerung umfaßt insbesondere einen Mikrocontroller, eine Anzeigeeinheit, eine Bedieneinheit, Signaleingänge und Signalausgänge, wobei die Recheneinheit, der Bildschirm, die Bedieneinheit, die Signaleingänge und die Signalausgänge in einem gemeinsamen Gehäuse untergebracht sind. Ein zweiter Schaltungsteil 4 dient der Ankopplung an ein Erweiterungsgerät 3 (Slave), welches an das Grundgerät 1 anschließbar ist. Die Schaltungsteile 2 und 4 können in die jeweiligen Geräte 1 und 3 integriert sein oder als separate Schaltungsmodule ausgebildet sein.

Der dem Grundgerät 1 zugeordnete Schaltungsteil 2 besteht aus einem Senderschaltungsteil 2a und einem Empfängerschaltungsteil 2b, wobei beide Teile vorzugsweise derart ausgebildet sind, daß eine galvanische Trennung zwischen Eingängen und Ausgängen der Schaltungsteile gewährleistet ist. Der dem Erweiterungsgerät 3 zugeordnete Schaltungsteil 4 besteht ebenfalls aus einem Senderschaltungsteil 4a und einem Empfängerschaltungsteil 4b. Desweiteren ist in dem dargestellten Ausführungsbeispiel vorzugsweise in den, dem Erweiterungsgerät 3 zugeordneten Schaltungsteil 4 eine Stromversorgung 6 integriert. Die Stromversorgung 6 kann alternativ auch extern oder in dem Schaltungsteil 2 des Grundgerätes 1 ausgebildet sein.

Die Schaltungsteile 2, 4 sind über die zweipolige Verbindungsleitung 8 miteinander verbindbar, wobei eine der Leitungen 8a ein Bezugspotential, hier Masse (GND), führt und die andere Leitung 8b als Datenübertragungsleitung dient. Die Daten werden über die einzige und daher für den bidirektionalen Datenverkehr vorgesehene Datenleitung 8b von beiden Geräten 1, 3 gesendet. Ein entsprechendes Kommunikationsprotokoll stellt sicher, daß eine Datenkollision vermieden wird. Erfindungsgemäß wird über die Stromversorgung 6 ein Strom Iq (vorzugsweise ein Konstantstrom) in die Datenleitung 8b eingeprägt. Dieser Strom Iq dient neben der Datenübertragung der Stromversorgung der galvanisch getrennten Teilbereiche der angeschlossenen Schaltungsteile 2a, 2b.

Desweiteren sind durch den Strom (Iq) in Abhängigkeit von Eingangssignalen der Senderschaltungsteile des einen Gerätes 1,3, Empfangssignalzustände des anderen Gerätes 3,1 veränderbar.

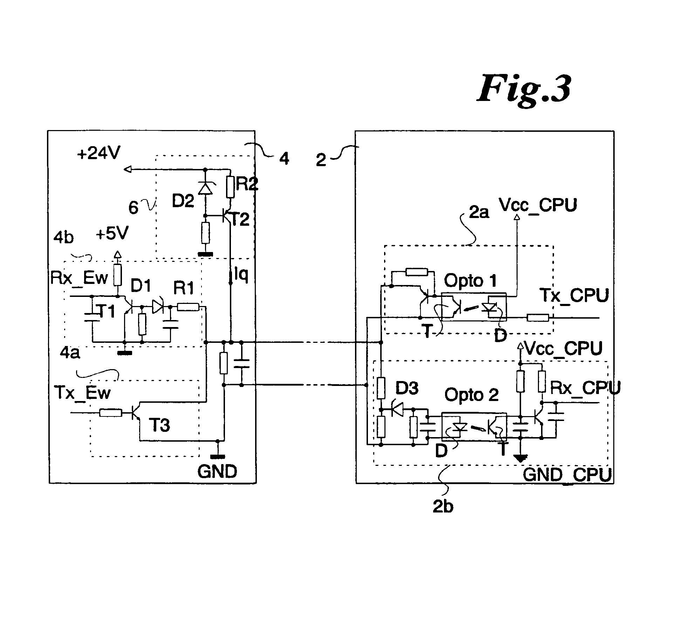

Aufbau der Schaltungsanordnung gemäß Fig. 2:

Sender- und Empfängerschaltungsteil 4a, 4b des dem Erweiterungsgerät 3 zugeordneten Schaltungsteils 4 weisen jeweils einen Halbleiterschalter T1, T3, vorzugsweise einen NPN-Schalttransistor, auf. Dabei wird der Sendeanschluß Tx_Ew über einen ohmschen Widerstand auf die Basis des einen Transistors T3 geführt. Der Emitter des Transistors T3 ist auf Bezugspotential Masse (GND) geführt und über die Bezugspotentialleitung 8a mit dem dem Grundgerät 1 zugeordneten Schaltungsteil 2 verbindbar. Der Kollektor des Sendetransistors T3 ist über eine Zenerdiode D1 und einen hierzu in Serie liegenden Widerstand R1 auf die Basis des Transistors T1 des Empfängerschaltungsteils 4b geführt und weiterhin mit der Stromversorgung 6 zum Zweck der Stromeinprägung verbunden. Ferner ist über den Kollektor des Transistors T3 der dem Erweiterungsgerät 3 zugeordnete Schaltungsteil 4 über die Datenübertragungsleitung 8b mit dem dem Grundgerät 1 zugeordneten Schaltungsteil 2 verbindbar. Der Empfängeranschluß Rx_Ew ist durch den über einen Pull-Up-Widerstand auf 5V gelegten Kollektor des Transistors T1 gebildet. Der Emitter des Transistors T1 ist auf Massepotential geführt.

Die Stromversorgung 6 ist vorzugsweise gebildet durch einen PNP-Transistor T2, der emitterseitig über einen ohmschen Widerstand R2 mit einem Versorgungspotential (hier 24 V) verbunden ist, wobei der Transistor T2 basisseitig über eine Zenerdiode D2 ebenfalls auf Versorgungspotential und über einen weiteren ohmschen Widerstand auf Bezugspotential geführt ist, und mit seinem Kollektoranschluß mit der Datenübertragungsleitung 8b verbunden ist.

In einer vereinfachten Ausführung, kann die Stromversorgung auch durch einen ohmschen Widerstand gebildet werden, der einendig auf ein Versorgungspotential geführt und anderendig mit der Datenübertragungsleitung 8b verbunden ist. Die Stromversorgung ist mit Vorteil in das Slavegerät 3 integriert.

Die Basis des Transistors T2 wird über einen aus einer Zenerdiode D2 und einem Widerstand gebildeten Spannungsteiler versorgt, wobei die Zenerdiode D2 kathodenseitig auf +24V gelegt ist und anodenseitig über den Widerstand mit Massepotential verbunden ist.

Sender- und Empfängerschaltungsteil 2a, 2b des dem Grundgerät 1 zugeordneten Schaltungsteils 2 sind vorzugsweise ebenfalls mit Halbleiterschaltern Opto 1, Opto 2 aufgebaut. Im dargestellten Ausführungsbeispiel sind diese, als eine galvanische Trennung gewährleistende, Schaltungselemente, vorzugsweise als Optokoppler Opto1; Opto2, ausgebildet. Der Empfängerschaltungsteil 2b besteht aus einem Optokoppler (Opto2) der transistorseitig (mit NPN-Transistorstufe) mit seinem Emitter auf Massepotential geführt ist. Der Kollektor ist über einen Pull-Up-Widerstand auf Vcc-Potential (hier ca. 5V) geführt und bildet gleichzeitig den grundgerätseitigen Empfängeranschluß RX_CPU.

Diodenseitig ist der Optokoppler Opto2 mit seiner Kathode mit dem Emitter des Optokopplers (mit NPN-Transistorstufe) Opto1 des Senderschaltungsteils 2a verbunden und über die Bezugspotentialleitung 8a mit dem Schaltungsteil 4 des Erweiterungsgerätes 3 verbindbar.

Mit seiner Anode ist der Optokoppler Opto2 des Empfängerschaltungsteils 2b über eine in Durchlaßrichtung angeordnete Zenerdiode D3 mit dem Kollektor des Optokopplers Opto1 des Senderschaltungsteils 2a verbunden und über die Datenübertragungsleitung 8b mit dem Schaltungsteil 4 des Erweiterungsgerätes 3 verbindbar.

Diodenseitig ist die Anode des Optokopplers Opto1 über einen Widerstand auf den Sendereingang Tx_CPU geführt. Kathodenseitig ist der Optokoppler Opto1 auf Massepotential gelegt.

Funktionsweise der Schaltungsanordnung gemäß Fig. 2:

Im Ruhezustand der Datenübertragungseinrichtung sind die Ausgangstransistoren T3 bzw. T_Opto1 (Transistor des Optokopplers Opto1) der beiden Senderschaltungsteile 2a, 4a gesperrt (Kollektor-Emitter-Strecke nicht leitend). Der eingeprägte Strom Iq teilt sich zwischen den zwei Empfängerschaltungsteilen 2b, 4b auf. Dabei ist die Datenübertragungseinrichtung vorzugsweise derart dimensioniert, daß der größte Stromanteil durch die Datenübertragungsleitung 8b und den dem Grundgerät 1 zugeordneten Empfängerschaltungsteil 2b (D3, D_Opto2 (Diode des zweiten Optokopplers Opto2)) fließt. Hierdurch wird die Störanfälligkeit der Schaltung minimiert.

In der beispielhaft dargestellten Stromversorgung 6 mit Zenerdiode D2 und Transistor T2 ist der Strom:

$$Iq = V_{R2}/R2 = (V_{D2} - V_{EB\_T2})/R2$$

Die Zenerdiode D3 bestimmt den Spannungspegel der Datenübertragungsleitung 8b im Ruhezustand (Signal inaktiv, logisch „0"):

$$V_{L\_RUHE} = V_{D3} + V_{D\_Opto2}$$

Der Strom durch den dem Erweiterungsgerät 3 zugeordneten Empfängerschaltungsteil 4b wird durch die Zenerdiode D1 und den Widerstand R1 bestimmt:

$$I1 = V_{R1}/R1 = (V_{L\_RUHE} - V_{D1} - V_{BE\_T1})/R1$$

Der Datenfluß erfolgt dann folgendermaßen:

Senderschaltungsteil 2a/Grundgerät 1 sendet- Empfängerschaltungsteil 4b/Erweiterungsgerät 3 empfängt:

Solange das gesendete Bit logisch "0" ist (Tx_CPU = 0), bleibt die Datenübertragungsleitung 8b inaktiv, also im Ruhezustand wie oben beschrieben.

Soll ein "1 "-Signal gesendet werden, so öffnet der Ausgangstransistor T_Opto1 des Senderschaltungsteils 2a und der gesamte Strom Iq fließt von der Stromversorgung 6 durch die Datenübertragungsleitung 8b, den Transistor T_Opto1 und die Masseleitung (Bezugspotentialleitung 8a) zurück zu Massepotential. Der Spannungspegel der Datenübertragungsleitung 8b ist nahezu 0V (Kollektor-Emitterspannung des Optokopplers Opto1 im durchgeschalteten Zustand $V_{CE\_SAT\_T\_Opto1} \approx 0,2V$).

Da kein Strom mehr durch die Zenerdiode D1 über R1 und die Basis von T1 fließen kann (D1 ist gesperrt), kippt der Empfängertransistor T1 um (sperrt, Rx_Ew = 1), so daß der Empfängeranschluß Rx_Ew des Erweiterungsgerätes 3 von logisch 0 auf logisch 1 schaltet .

Gleichzeitig fließt auch durch die Zenerdiode D3 und die Diode D_Opto2 des Optokopplers Opto2 kein Strom mehr und der Transistor des Empfänger-Optokopplers, T_Opto2 kippt ebenso um (sperrt, Rx_CPU = 1). Auf diese Weise bekommt das Grundgerät 1 eine Rückmeldung, die zu Prüfzwecken benutzt werden kann.

Senderschaltungsteil 4a/Erweiterunasgerät 3 sendet - Empfängerschaltungsteil 2b/Grundaerät 1 empfängt:

Solange das gesendete Bit logisch „0" ist (Tx_CPU = 0), bleibt die Datenübertragungsleitung 8b inaktiv, also im Ruhezustand wie oben beschrieben.

Soll ein „1"-Signal gesendet werden, so öffnet der Sendetransistor T3 im Erweiterungsmodul und der gesamte Strom Iq fließt von der Stromversorgung 6 durch den Transistor T3 zu Massepotential. Der Spannungspegel der Datenübertragungsleitung 8b ist nahezu 0V (Kollektor-Emitter-Spannung des durchgeschalteten Transistors T3 $V_{CE\_SAT\_T3} \approx 0,2V$).

Da kein Strom mehr durch die Zenerdiode D3 und die Diode D_Opto2 des Optokopplers Opto2 fließen kann (D3 ist gesperrt), kippt der Transistor T_Opto2 des Optokopplers Opto2, um und sperrt, so daß am Empfängeranschluß Rx_CPU des Grundgerätes das Signal von logisch 0 auf logisch 1 wechselt.

Gleichzeitig fließt auch durch die Zenerdiode D1 über R1 und die Basis von T1 kein Strom mehr und der Empfängertransistor T1 sperrt ebenfalls, so daß am Empfangsanschluß Rx_Ew des Erweiterungsgerätes 3 das Signal von logisch 0 auf logisch 1 wechselt. Auf diese Weise bekommt das Erweiterungsgerät 3 eine Rückmeldung, die zu Prüfzwecken benutzt werden kann.

Erfindungsgemäß ist die Datenübertragungseinrichtung derart ausgebildet, daß die normalen Arbeitsströme auch als „Versorgung" für die verbindungsleitungsseitigen (busseitigen) galvanisch getrennten Schaltungsteile des Grundgerätes dienen. Diese Anordnung eignet sich insbesondere für asynchrone Übertragungsarten.

In der Praxis sind zusätzliche Bauelemente in Form von Filtern und Verstärkerstufen erforderlich. Eine derartig optimierte Schaltung ist in Fig. 3 veranschaulicht.

In einer bevorzugten Ausführungsform der Erfindung sind die Sender- und Empfängerschaltungsteile (2a, 2b) als eine galvanische Trennung gewährleistende Elemente, insbesondere als Optokoppler (Opto1, Opto2), ausgebildet. Die Sender- und Empfängerschaltungsteile (4a, 4b) sind vorzugsweise in Form von Transistorstufen ausgeführt.

Die vorliegende Erfindung ist nicht auf die vorstehend beschriebenen Ausführungsformen beschränkt, sondern umfaßt auch alle im Sinne der Erfindung gleichwirkenden Ausführungsformen. So läßt sich die Erfindung beispielsweise auch mit anderen Halbleiterschaltelementen Operationsverstärkern oder dergleichen realisieren.

**Patentansprüche**

1.  Datenübertragungseinrichtung zur seriellen asynchronen Datenübertragung, bestehend aus
    einem ersten Gerät (1) und einem zweiten Gerät (3),
    wobei jedem der Geräte (1; 3) ein Schaltungsteil (2; 4) zugeordnet ist, ,
    und jeder der Schaltungsteile (2; 4) einen Empfängerschaltungsteil (2b; 4b) und
    einen Senderschaltungsteil (2a; 4a) aufweist,
    mit einem Sendeanschluß (Tx_Ew; Tx_CPU) und mit einem Empfangsanschluß (Rx_Ew; Rx_CPU), sowie mit einem Anschluß für eine Datenübertragungsleitung (8b) und
    mit einem Anschluß für eine Bezugspotentialleitung (8a) und die Schaltungsteile (2; 4) über die Datenübertragungsleitung (8b) zur bidirektionalen Datenübertragung sowie über die Bezugspotentialleitung (8a) miteinander verbindbar sind,
    **dadurch gekennzeichnet, daß** eine zwischen Versorgungspotential und Bezugspotential geführte Stromquelle (6) vorhanden ist, über die ein Strom (Iq) in die Datenübertragungsleitung (8b) einspeisbar ist derart, daß in Abhängigkeit von dem Signalzustand des Sendeanschlusses (Tx_Ew; Tx_CPU) des jeweiligen Schaltungsteils (4; 2) der Signalzustand des jeweils zugeordneten Empfangsarischlusses (Rx_CPU; Rx_EW) des anderen Schaltungsteils (2; 4) veränderbar ist.

2.  Datenübertragungseinrichtung nach Anspruch 1, **dadurch gekennzeichnet, daß** zumindest das erste Gerät (1) eine programmierbare Kleinsteuerung mit einer Recheneinheit, insbesondere einem Mikrocontroller, einer Anzeigeeinheit, einer Bedieneinheit, mit Signaleingängen und mit Signalausgängen ist, wobei die Recheneinheit, der Bildschirm, die Bedieneinheit, die Signaleingänge und die Signalausgänge in einem gemeinsamen Gehäuse untergebracht sind.

3.  Datenübertragungseinrichtung nach Anspruch 1, **dadurch gekennzeichnet, daß** das erste Gerät (1) als erstes separates Modul zum Anschluß an eine programmierbare Kleinsteuerung mit einer Recheneinheit, insbesondere einem Mikrocontroller, einer Anzeigeeinheit, einer Bedieneinheit, mit Signaleingängen und mit Signalausgängen ausgebildet ist, wobei die Recheneinheit, der Bildschirm, die Bedieneinheit, die Signaleingänge und die Signalausgänge in einem gemeinsamen Gehäuse untergebracht sind, und das zweite Gerät (3) als ein zweites separates Modul zum Anschluß eines die Funktionen des ersten Gerätes (1) erweiternden Gerätes ausgebildet ist und beide Module über die Datenübertragungsleitung (8b) und die Bezugspotentialleitung (8a) verbindbar sind.

4.  Datenübertragungseinrichtung nach Anspruch 1-3, **dadurch gekennzeichnet, daß** die Stromquelle (6) in das zweite Gerät (3) integriert ist.

5.  Datenübertragungseinrichtung nach Anspruch 1 - 4, **dadurch gekennzeichnet, daß** jeder Empfänger und Senderschaltungsteil (2b, 4b; 2a, 4a) mindestens einen Halbleiterschalter umfaßt.

6.  Datenübertragungseinrichtung nach einem der vorhergehenden Ansprüche, **dadurch gekennzeichnet, daß** Empfänger- und Senderschaltungsteil (2b, 2a) des ersten Gerätes (1) derart ausgebildet sind, daß eine galvanische Trennung zwischen Sende- und Empfangsanschluß (Tx_CPU, Rx_CPU) einerseits und den Anschlüssen für die Datenübertragungs- und Bezugspotentialleitung andererseits vorhanden ist.

7.  Datenübertragungseinrichtung nach Anspruch 1-6, **dadurch gekennzeichnet, daß** die Stromquelle (6) als Konstantstromquelle ausgebildet ist.

8.  Datenübertragungseinrichtung nach Anspruch 7, **dadurch gekennzeichnet, daß** die Stromquelle (6) gebildet ist durch einen PNP-Transistor (T2), der emitterseitig über einen ohmschen Widerstand (R2) mit einem Versorgungspotential verbunden ist, wobei der Transistor (T2) basisseitig über eine Zenerdiode (D2) ebenfalls auf Versorgungspotential und über einen weiteren ohmschen Widerstand auf Bezugspotential geführt ist, und mit seinem Kollektoranschluß mit der Datenübertragungsleitung (8b) verbunden ist.

9.  Datenübertragungseinrichtung nach einem der Ansprüche 1 -6, **dadurch gekennzeichnet, daß** die Stromquelle (6) gebildet ist durch einen ohmschen Widerstand, der mit seinem einen Ende mit einem Versorgungspotential verbunden ist und der mit seinem anderen Ende mit der Datenübertragungsleitung (8b) verbunden ist.

**Claims**

1. Data transmission system for serial asynchronous data transmission, consisting of:

    a first device (1) and a second device (3),
    a circuit part (2; 4) being associated with each of the devices (1; 3),
    and each of the circuit parts (2; 4) having a receiver circuit part (2b; 4b) and a transmitter circuit part (2a; 4a), with a transmitting terminal (Tx_Ew; Tx_CPU) and with a receiving terminal (Rx_Ew; Rx_CPU), and also with a terminal for a data transmission line (8b) and with a terminal for a reference potential line (8a) and the circuits parts (2; 4) being interconnectable via the data transmission line (8b) for bidirectional data transmission and also via the reference potential line (8a),

    **characterised in that** there is provided a power source (6) which is guided between the supply potential and reference potential and via which a current (Iq) can be fed into the data transmission line (8b) in such a way that, as a function of the signal state of the transmitting terminal (Tx_Ew; Tx_CPU) of each circuit part (4; 2), the signal state of each associated receiving terminal (Rx_CPU; Rx_Ew) of the other circuit part (2; 4) is variable.

2. Data transmission system according to claim 1, **characterised in that** at least the first device (1) is a programmable small control comprising a computing unit, in particular a microcontroller, a display unit, an operating unit, with signal inputs and signal outputs, the computing unit, the screen, the operating unit, the signal inputs and the signal outputs being accommodated in a common housing.

3. Data transmission system according to claim 1, **characterised in that** the first device (1) is formed as a first separate module for connecting to a programmable small control comprising a computing unit, in particular a microcontroller, a display unit, an operating unit, with signal inputs and with signal outputs, the computing unit, the screen, the operating unit, the signal inputs and signal outputs being accommodated in a common housing, and the second device (3) is formed as a second separate module for connecting a device extending the functions of the first device (1) and both modules can be connected via the data transmission line (8b) and the reference potential line (8a).

4. Data transmission system according to claims 1 to 3, **characterised in that** the power source (6) is integrated into the second device (3).

5. Data transmission system according to claims 1 to 4, **characterised in that** each receiver and transmitter circuit part (2b, 4b; 2a, 4a) comprises at least one semiconductor switch.

6. Data transmission system according to any one of the preceding claims, **characterised in that** the receiver and transmitter circuit parts (2b, 2a) of the first device (1) are formed in such a way that electrical isolation is provided between the transmitting and receiving terminals (Tx_CPU, Rx_CPU), on the one hand, and the terminals for the data transmission and reference potential lines, on the other hand.

7. Data transmission system according to claims 1 to 6, **characterised in that** the power source (6) is in the form of a stabilised power source.

8. Data transmission system according to claim 7, **characterised in that** the power source (6) is formed by a PNP transistor (T2) which is connected on the emitter side to a supply potential via an ohmic resistor (R2), the transistor (T2) being guided on the base side via a Zener diode (D2) also to the supply potential and via a further ohmic resistor to the reference potential, and the collector terminal of said transistor being connected to the data transmission line (8b).

9. Data transmission system according to any one of claims 1 to 6, **characterised in that** the power source (6) is formed by an ohmic resistor, one end of which is connected to a supply potential and the other end of which is connected to the data transmission line (8b).

**Revendications**

1. Dispositif de transmission de données pour une transmission de données sérielle asynchrone, comprenant:

   un premier dispositif (1) et un deuxième dispositif (3);
   une partie de circuit (2; 4) étant affectée à chacun des dispositifs (1; 3);
   chacune des parties de circuit (2; 4) comportant une partie de circuit de réception (2b; 4b) et une partie de circuit d'émission (2a; 4a);
   avec une borne d'émission (Tx_Ew; Tx_CPU) et une borne de réception (Rx_Ew; Rx_CPU), une borne pour une ligne de transmission de données (8b) et une borne pour une ligne de potentiel de référence (8a), les parties de circuit (2; 4) pouvant être reliées par l'intermédiaire de la ligne de transmission de données (8b) en vue d'une transmission bidirectionnelle des données ainsi que par l'intermédiaire de la ligne de potentiel de référence (8a);

   **caractérisé en ce qu'**il comporte une source de courant (6) reliée entre le potentiel d'alimentation et le potentiel de référence, permettant l'alimentation d'un courant (1q) dans la ligne de transmission de données (8b), de sorte qu'en fonction de l'état des signaux de la borne d'émission (Tx_Ew; Tx_CPU) de la partie de circuit respective (4; 2), l'état des signaux de la borne de réception respectivement affectée (Rx_Ew; Rx_CPU) de l'autre partie de circuit (2; 4) peut être changé.

2. Dispositif de transmission de données selon la revendication 1, **caractérisé en ce qu'**au moins le premier dispositif (1) est une commande miniature programmable avec une unité de calcul, en particulier un microcontrôleur, une unité d'affichage, une unité de fonctionnement, avec des entrées de signaux et des sorties de signaux, l'unité de calcul, l'écran, l'unité de fonctionnement, les entrées de signaux et les sorties de signaux étant logés dans un boîtier commun.

3. Dispositif de transmission de données selon la revendication 1, **caractérisé en ce que** le premier dispositif (1) est formé par un premier module séparé en vue de la connexion à une commande miniature programmable comportant une unité de calcul, en particulier un microcontrôleur , une unité d'affichage, une unité de fonctionnement, avec des entrées de signaux et des sorties de signaux, l'unité de calcul, l'écran, l'unité de fonctionnement, les entrées de signaux et les sorties de signaux étant logés dans un boîtier commun, le deuxième dispositif (3) étant formé par un deuxième module séparé en vue de la connexion d'un dispositif élargissant les fonctions du premier dispositif (1), les deux modules pouvant être reliés par la ligne de transmission de données (8b) et la ligne de potentiel de référence (8a).

4. Dispositif de transmission de données selon les revendications 1 à 3, **caractérisé en ce que** la source de courant (6) est intégrée dans le deuxième dispositif (3).

5. Dispositif de transmission de données selon les revendications 1 à 4, **caractérisé en ce que** chaque partie de circuit de réception et d'émission (2b; 4b; 2a, 4a) englobe au moins un interrupteur à semi-conducteurs.

6. Dispositif de transmission de données selon l'une des revendications précédentes, **caractérisé en ce que** la partie de circuit de réception et d'émission (2b, 2a) du premier dispositif (1) est configurée de sorte à entraîner une séparation galvanique entre la borne d'émission et la borne de réception (Tx_CPU, Rx_CPU) d'une part et les bornes pour la ligne de transmission des données et la ligne de potentiel de référence d'autre part.

7. Dispositif de transmission de données selon les revendications 1 à 6, **caractérisé en ce que** la source de courant (6) est formée par une source de courant constant.

8. Dispositif de transmission de données selon la revendication 7, **caractérisé en ce que** la source de courant (6) est formée par un transistor PNP (T2), relié du côté de l'émetteur par une résistance ohmique (R2) à un potentiel d'alimentation, le transistor (T2) étant relié du côté de la base par l'intermédiaire d'une diode Zener (D2) également au potentiel d'alimentation et par l'intermédiaire d'une résistance ohmique additionnelle au potentiel de référence, et relié avec sa borne de collecteur à la ligne de transmission des données (8b).

9. Dispositif de transmission de données selon l'une des revendications 1 à 6, **caractérisé en ce que** la source de courant (6) est formée par une résistance ohmique, reliée avec une de ses extrémités à un potentiel d'alimentation et avec son autre extrémité à la ligne de transmission des données (8b).

*Fig.1*

*Fig.2*

## *Fig.3*